# EUROPÄISCHE PATENTSCHRIFT

(11) **EP 3 208 930 B1**
(45) Veröffentlichungstag und Bekanntmachung des Hinweises auf die Patenterteilung: **12.08.2020**
(21) Anmeldenummer: 16156307.7
(22) Anmeldetag: 18.02.2016
(51) Int. Cl.: H02M 7/483, H02M 1/00

(54) **MODULARER MEHRZELLENUMRICHTER MIT ZELLINTERNER KOMPENSATION VON SPANNUNGSSCHWANKUNGEN AM ZELLKONDENSATOR**
MODULAR MULTICELL CONVERTER WITH CELL INTERNAL COMPENSATION OF CELL CAPACITOR VOLTAGE DEVIATIONS
CONVERTISSEUR MULTI-CELLULE AVEC COMPENSATION INTERNE DES DÉVIATIONS DE TENSION DU CONDENSATEUR DE CELLULE

(43) Veröffentlichungstag der Anmeldung: 23.08.2017
(73) Patentinhaber: Siemens Aktiengesellschaft, 80333 München (DE)
(72) Erfinder: Blum, Manuel, 85521 Ottobrunn (DE); Galek, Marek, 82398 Polling (DE)

(56) Entgegenhaltungen:
- EP-A1- 2 458 726
- SAMIR KOURO ET AL: "Multicarrier PWM With DC-Link Ripple Feedforward Compensation for Multilevel Inverters", IEEE TRANSACTIONS ON POWER ELECTRONICS, INSTITUTE OF ELECTRICAL AND ELECTRONICS ENGINEERS, USA, Bd. 23, Nr. 1, 1. Januar 2008 (2008-01-01) , Seiten 52-59, XP011198648, ISSN: 0885-8993, DOI: 10.1109/TPEL.2007.911834
- JOSE IGNACIO LEON ET AL: "Multidimensional Modulation Technique for Cascaded Multilevel Converters", IEEE TRANSACTIONS ON INDUSTRIAL ELECTRONICS, IEEE SERVICE CENTER, PISCATAWAY, NJ, USA, Bd. 58, Nr. 2, 1. Februar 2011 (2011-02-01), Seiten 412-420, XP011341642, ISSN: 0278-0046, DOI: 10.1109/TIE.2010.2048833

## Beschreibung

Die vorliegende Erfindung betrifft ein modulares, elektronisches System mit mehreren Modulen und einer Steuerungseinheit. Insbesondere bezieht sich die Erfindung auf einen modularen Mehrpunktstromrichter.

Häufig werden elektronische Systeme modular ausgebaut. Der Grund hierfür kann in der Flexibilität, in der verarbeiteten Leistung, der eingesetzten Spannung etc. liegen.

Ein konkretes Beispiel sind sogenannte modulare Mehrpunktstromrichter (Modular Multilevel Converter: M2C). Solche modulare Mehrpunktstromrichter können beispielsweise für Hochspannungs-Gleichstrom-Übertragungen (HGÜ) eingesetzt werden. Sie eignen sich aber ebenso für Mittelspannungs- und Niedervoltanwendungen.

Der modulare Aufbau solcher Systeme bedingt, dass die einzelnen Module in geeigneter Weise angesteuert werden müssen. Dazu kann jedes Modul einzeln mit einem separaten Kabel angesprochen werden. Alternativ hierzu können die Module des Systems aber auch durch einen Kommunikationsbus vernetzt sein. Dieser Bus stellt dann die Schnittstelle zwischen einer zentralen Steuerungseinheit und den einzelnen Modulen dar. Dabei kann jedes Modul in Abhängigkeit von seiner Funktion beziehungsweise seines Aufbaus einen Aktor, eine Zelle oder dergleichen darstellen.

Jedes Modul wird von der zentralen Steuereinheit mit seinen zu stellenden Sollwerten gesteuert. Ein solcher Sollwert ist beispielsweise der Aussteuergrad des lokalen, d.h. modulseitigen PWM-Modulators (Pulsweitenmodulation) und repräsentiert so in der Regel einen bestimmten Spannungs- oder Stromsollwert. Der konkrete PWM-Wert wird meist auf der Grundlage der zuletzt auf der zentralen Steuereinheit vorhandenen Modulspannung, die jedes Modul selbst liefert, errechnet. Aufgrund reduzierter Kommunikationskapazitäten werden die in der zentralen Steuerungseinheit vorhandenen Modulspannungen, die die Ausgangsspannungen der Module darstellen, bei Bus-vernetzten Systemen mit einer Aktualisierungsfrequenz kleiner/gleich der Modulationsfrequenz erneuert. Beispielsweise offenbart EP 2 458 726 A1 ein System mit modularem Mehrpunktstromrichter und zentraler Steuerungseinheit. ¶

Bei Systemen, deren Module beziehungsweise Steller relativ kleine lokale Energiespeicher besitzen, ergibt sich ein entsprechend hoher Spannungsrippel. Dies führt zu einer Diskrepanz zwischen errechnetem Sollwert und tatsächlich realisierter Ausgangsspannung an jedem Modul.

Um dieser Problematik zu begegnen, besitzen bisherige Systeme meist eine schnelle parallele Anbindung der Module an die zentrale Steuerungseinheit (Punkt-zu-Punkt-Verbindung) oder sie verfügen über einen ausreichend großen Energiespeicher, welcher einen ausreichend kleinen Spannungsrippel gewährleistet. Beide dieser Alternativen sind jedoch mit erhöhtem Hardwareaufwand verbunden und damit bei kostensensitiven Systemen zu vermeiden.

Die Aufgabe der vorliegenden Erfindung besteht somit darin, mit möglichst geringem Aufwand die Diskrepanz zwischen Sollwert und Ausgangsspannung bei einem Modul eines modularen Systems zu vermindern.

Erfindungsgemäß wird diese Aufgabe gelöst durch ein verteiltes, modulares, elektronisches System, das als modularer Mehrpunktstromrichter ausgebildet ist, mit
- mehreren Modulen und
- einer Steuerungseinheit, wobei
- die Steuerungseinheit dazu ausgebildet ist, als Steuerungswerte jeweils Spannungs-Zeit-Produktwerte an die Module zu senden,
- jedes der Module mit
   ∘ einer an- und abschaltbaren Spannungsquelle,
   ∘ einem Spannungsmesser zum Gewinnen mindestens eines Spannungsmesswerts bezüglich der eigenen Ausgangsspannung und
   ∘ einer Signalverarbeitungseinrichtung zum Erzeugen eines Abschaltsignals in Abhängigkeit von dem mindestens einen Spannungsmesswert und dem von der Steuerungseinheit erhaltenen Spannungs-Zeit-Produktwert ausgestattet ist und
- jedes Modul dazu ausgebildet ist, seine Spannungsquelle entsprechend dem erzeugten Abschaltsignal abzuschalten.

Darüber hinaus wird erfindungsgemäß bereitgestellt ein Verfahren zum Betreiben eines verteilten, modularen, elektronischen , als modularer Mehrpunktstromrichter ausgebildeten Systems mit mehreren Modulen und einer Steuerungseinheit durch
- Senden eines Spannungs-Zeit-Produktwertes als Steuerungswert von der Steuerungseinheit an eines der Module,
- Gewinnen mindestens eines Spannungsmesswerts bezüglich der eigenen Ausgangsspannung und Erzeugen eines Abschaltsignals in Abhängigkeit von dem mindestens einen Spannungsmesswert und dem von der Steuerungseinheit erhaltenen Spannungs-Zeit-Produktwert durch das Modul und
- Abschalten einer Spannungsquelle des Moduls entsprechend dem Abschaltsignal.

In vorteilhafter Weise sollen entsprechend der Erfindung die einzelnen Module etwas selbständiger betrieben werden, wodurch es gelingt, Soll- und Istzustand bezüglich der Ausgangsspannung aneinander anzugleichen. Hierzu wird anstelle eines reinen Spannungs-Sollwerts ein Spannungs-Zeit-Produktwert als Sollwert beziehungsweise Steuerungswert von der Steuerungseinheit an ein Modul gesendet. Dabei kann natürlich jedes Modul des Systems einen anderen Steuerungswert beziehungsweise Sollwert erhalten. Jedes Modul besitzt eine an- und abschaltbare Spannungsquelle beispielsweise in Form eines Kondensators sowie einen Spannungsmesser, mit dem die Zellspannung des Moduls gemessen werden kann. Da nun jedes Modul seine aktuelle Ausgangsspannung kennt und von der Steuerungseinheit den Spannungs-Zeit-Produktwert, also ein Produkt aus Spannung und Zeit, von der Steuerungseinheit erhalten hat, kann aus beiden Größen ein Zeitwert berechnet oder ein entsprechendes Ausschaltkriterium (z.B. Integral s.u.) gewonnen werden. Der Zeitwert entspräche der Zeitdauer, während der die gemessene Ausgangsspannung anliegen muss. Im einfachsten Fall muss der Spannungs-Zeit-Produktwert einfach durch den gemessenen Spannungswert dividiert werden, um den Zeitwert zu erhalten. Dazu verfügt jedes Modul über eine entsprechende Recheneinrichtung. Der berechnete Zeitwert wird schließlich dazu genutzt, in dem Modul die interne Spannungsquelle abzuschalten. Dadurch kann gewährleistet werden, dass die Sollspannung auch tatsächlich über die gewünschte Zeit vom Modul bereitgestellt wird.

Durch die weitgehende Unabhängigkeit der Module von der Steuerungseinheit im Hinblick auf die Erzeugung der Spannung kann damit erreicht werden, dass der Mehrpunktstromrichter eine Istspannung liefert, die der Sollspannung eher entspricht.

In einer Ausgestaltung kann das System ein Kommunikationssystem, z.B einen Kommunikationsbus, zur Kommunikation zwischen den Modulen und der Steuerungseinheit aufweisen, über den die Spannungs-Zeit-Produktwerte von der Steuerungseinheit zu den jeweiligen Modulen übertragbar sind. Dies hat den Vorteil, dass die Verschaltung der Module mit der Steuerungseinheit wesentlich einfacher gestaltet werden kann. Insbesondere müssen nicht einzelne Punkt-zu-Punkt-Verbindungen zwischen den Modulen und der Steuerungseinheit aufgebaut werden. Beispielsweise können so sämtliche Module des Systems an einen oder wenige Busse angeschlossen werden.

In einer weiteren Ausgestaltung kann jedes Modul dazu ausgebildet sein, seine Spannungsquelle durch Pulsweitenmodulation an- und abzuschalten. Dazu verfügt jedes Modul über einen entsprechenden Pulsweitenmodulator, der einen Steuerwert in ein entsprechendes Modulationssignal umsetzt.

Bei einer Weiterentwicklung werden die Spannungs-Zeit-Produktwerte mit einer geringeren Frequenz aktualisiert als die Modulationsfrequenz der Pulsweitenmodulation. Dies bedeutet, dass eine Spannungs-Zeit-Fläche mit mehreren Impulsen realisiert werden kann/muss. Andererseits kann das aber auch bedeuten, dass die gewünschte Spannungs-Zeit-Fläche entsprechend dem Verhältnis beider Frequenzen zueinander mehrfach wiederholt werden muss. Die modulinterne Steuerung ist entsprechend auszulegen.

Das modulare System kann für Niederspannungs- und Mittelspannungsbetrieb (mindestens 10 kV) ausgelegt sein. Bei entsprechender Auslegung für höhere Spannungen sind auch Einsätze bei Hochspannungsbetrieb möglich. Beispielsweise können so auch modulare Mehrpunktstromrichter für Hochspannungs-Gleichstrom-Übertragung eingesetzt werden, bei denen Spannungen von 1 Million Volt und mehr auftreten.

Die Steuerungs- beziehungsweise Recheneinrichtung jedes Moduls kann als FPGA (Field Programmable Gate Array) oder Mikroprozessor realisiert sein. Im Falle eines FPGA kann die Programmierung also beispielsweise vor Ort erfolgen. Beide Recheneinrichtungen ermöglichen eine hohe Flexibilität.

In einer Ausgestaltungsvariante kann jedes Modul dazu ausgelegt sein, die Dauer eines Impulses, währenddessen die Spannungsquelle angeschaltet ist und währenddessen der Spannungsmesswert gewonnen ist, in Abhängigkeit von dem berechneten Zeitwert einzustellen. Es wird dabei also unmittelbar der aktuelle Impuls und vorzugsweise nur dieser über den Spannungs-Zeit-Produktwert gesteuert. Dies erfordert eine rasche Signalverarbeitung und führt zu einer qualitativ hochwertigen Steuerung.

Alternativ kann jedes Modul dazu ausgelegt sein, für einen ersten Impuls, währenddessen die Spannungsquelle ausgeschaltet ist, den Spannungsmesswert zu gewinnen und die Dauer eines dem ersten Impuls nachfolgenden Impulses, währenddessen die Spannungsquelle ebenfalls angeschaltet ist, in Abhängigkeit von dem berechneten Zeitwert einzustellen. Dies bedeutet, dass sich ein etwaiges Defizit des ersten Impulses erst auf die Dauer des nachfolgenden zweiten Impulses auswirkt. Gegebenenfalls kann sich ein Defizit auch auf mehrere nachfolgende Impulse auswirken. In diesem Fall kann die Signalverarbeitung unter Umständen eine geringere Geschwindigkeit besitzen.

Bei einer weiteren alternativen Ausgestaltung ist jedes Modul dazu ausgelegt, kontinuierlich in regelmäßigen Zeitabständen je einen Spannungsmesswert zu gewinnen, die Spannungsmesswerte zu integrieren und das Abschaltsignal zu erzeugen, wenn der Integrationswert den Spannungs-Zeit-Produktwert erreicht oder übersteigt. Damit ist keine Vorhersage für einen Abschaltzeitpunkt notwendig. Vielmehr kann das System sehr dynamisch auf geänderte Spannungsmesswerte reagieren.

Die oben genannten funktionellen Merkmale des Systems lassen sich auch auf das erfindungsgemäße Verfahren als entsprechende Verfahrensmerkmale übertragen.

Die vorliegende Erfindung wird nun anhand der beigefügten Zeichnungen näher erläutert, in denen zeigen:
- FIG 1: die Architektur eines verteilten, modularen, elektronischen Systems anhand eines modularen Mehrpunktstromrichters;
- FIG 2: einen prinzipiellen Schaltplan eines Moduls des Systems; und
- FIG 3: einen Spannungsverlauf der Ausgangsspannung an einem Modul.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Kombinationen, sondern auch in Alleinstellung oder in anderen technisch sinnvollen Kombinationen realisierbar sind.

Ein verteiltes, modulares, elektronisches System weist eine Vielzahl von Modulen und mindestens eine Steuereinheit auf. Die Module sind über einen oder mehrere Kommunikationsbusse mit einer zentralen Steuereinheit verbunden. Derartige verteilte Systeme können im Anlagenbau zahlreiche Anwendungen finden. Dabei kann jedes Modul einen Aktor aufweisen, der eine elektrische oder mechanische Funktionalität besitzt.

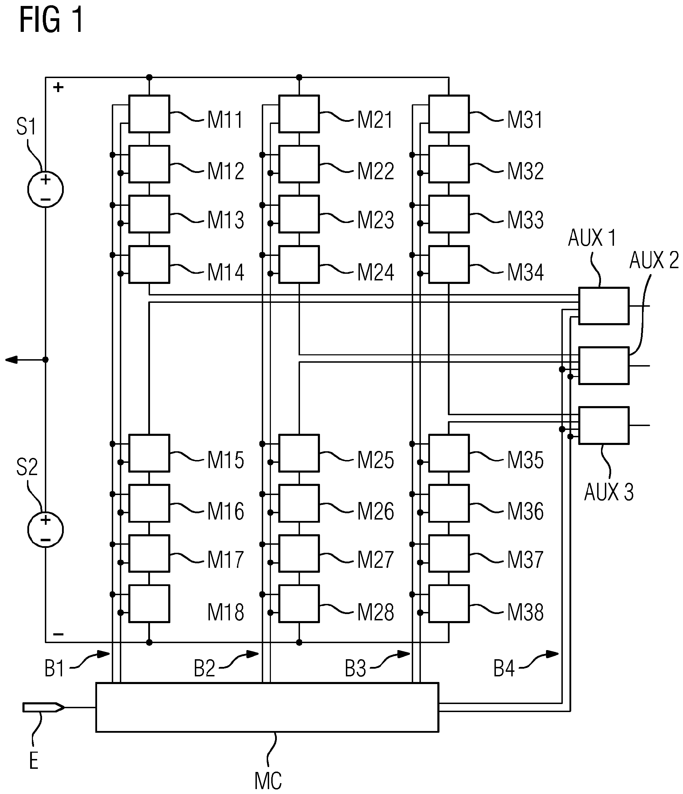

In dem Beispiel von FIG 1 ist ein modulares System dargestellt, welches als modularer Mehrpunktstromrichter realisiert ist. Ein solcher Stromrichter dient beispielsweise zum Gleichrichten eines Drehstroms in einem Gleichstrom, wie es beispielsweise für HGÜ-Übertragungen notwendig ist. Der dargestellte Stromrichter kann aber auch am anderen Ende der HGÜ-Leitung zum Wandeln von Gleichstrom in Drehstrom eingesetzt werden. Das Systemkonzept der modularen Mehrpunktstromrichter ist aber auch für Umrichter verwendbar.

Der in FIG 1 wiedergegebene Mehrpunktstromrichter besitzt eine Vielzahl an Modulen, die strangweise miteinander verknüpft sind. In einem ersten Strang befinden sich die Module M11 bis M18, in einem zweiten Strang die Module M21 bis M28 und in einem dritten Strang die Module M31 bis M38. Alle Module besitzen in der Regel gleichen Aufbau. Jeweils vier der Module in einem Strang sind bezogen auf ihren Leistungspfad in Serie geschaltet.

Zwei Gleichspannungsquellen S1 und S2 sind in Serie geschaltet, und durch diese Serienschaltung wird eine Plusschiene "+" und eine Minusschiene "-" symmetrisch mit Gleichspannung gespeist.

Die drei Modulserienschaltungen M11 bis M14, M21 bis M24 und M31 bis M34 sind einerseits an die Plusschiene angeschlossen und andererseits mit einer jeweiligen Hilfseinheit AUX1, AUX2 und AUX3 verbunden. Symmetrisch dazu sind die Modulserienschaltungen M15 bis M18, M25 bis M28 und M35 bis M38 einerseits mit der Minusschiene verbunden und andererseits mit den Hilfseinheiten AUX1, AUX2 und AUX3. Konkret führen also die Leistungspfade der Module M14 und M15 in die Hilfseinheit AUX1, die Leistungspfade der Module M24 und M25 in die Hilfseinheit AUX2 und die Leistungspfade der Module M34 und M35 in die Hilfseinheit AUX3. Jede der Hilfseinheiten AUX1, AUX2 und AUX 3 vereint die jeweiligen Leistungspfade und produziert eine Phase eines Drehstromsystems. Damit wäre ein Wechselrichter realisiert.

Alternativ kann der Stromrichter auch dazu ausgebildet sein, dass er in umgekehrter Richtung einen dreiphasigen Strom in einen Gleichstrom wandelt. In diesem Fall kann er als Gleichrichter genutzt werden.

Die Steuerung des Stromrichters erfolgt mit einer Steuereinheit MC. Diese Steuereinheit MC steuert nicht nur sämtliche Module, sondern auch die Hilfseinheiten AUX1, AUX2 und AUX3. Mit einem ersten Bus B1 werden die Module M11 bis M18, mit einem zweiten Bus B2 die Module M21 bis M28, mit einem dritten Bus B3 die Module M31 bis M38 und mit einem vierten Bus B4 die Hilfseinheiten AUX1 bis AUX3 gesteuert. Jeder dieser Busse B1 bis B4 verfügt nicht nur über eine Datenleitung, sondern auch über eine Hilfsspannungsleitung. Über die jeweilige Datenleitung werden gegebenenfalls bidirektional Daten transportiert. Ebenfalls werden die einzelnen Module von der Steuereinheit MC mit Steuerdaten versorgt. Gegebenenfalls werden Zustandsdaten wie etwa Spannungen, Temperaturwerte und dergleichen, zurück an die Steuereinheit MC geliefert.

Über die Hilfsspannungsleitungen der Busse B1 bis B4 werden sowohl die Module als auch die Hilfseinheiten von der Steuereinheit MC mit einer Hilfsspannung versorgt, die die jeweiligen aktiven Bauelemente für den Betrieb brauchen. Die Steuereinheit MC besitzt gegebenenfalls noch einen Eingang E für externe Befehle.

Der Stromrichter von FIG 1 ist rein exemplarisch. Der prinzipielle Aufbau könnte auch für einen einphasigen Stromrichter oder einen mehrphasigen Stromrichter genutzt werden. Auch muss an den Zwischenkreis nicht eine symmetrische Spannung vorliegen, sodass jeder Strang nicht symmetrisch zweigeteilt sein muss wie in dem Beispiel von FIG 1. In diesem Fall können dann auch gegebenenfalls die Hilfseinheiten AUX1 bis AUX3 entfallen. Auch die Anzahl der Module pro Strang kann variieren.

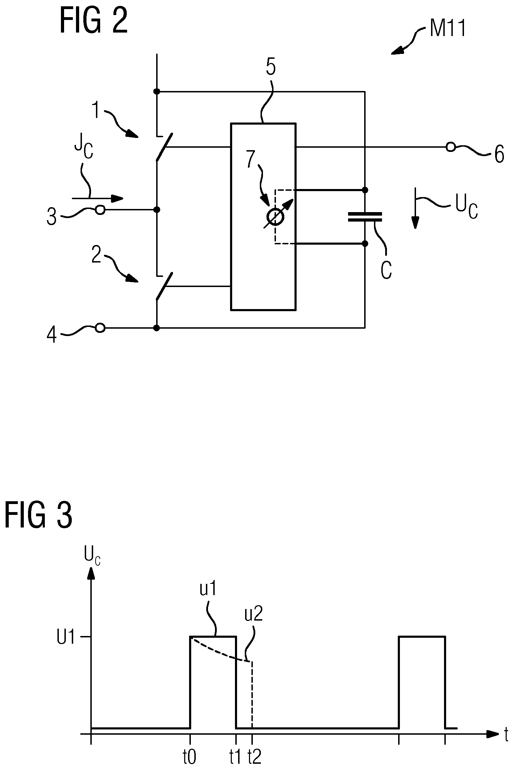

FIG 2 zeigt den prinzipiellen Schaltplan eines der Module, stellvertretend anhand des Moduls M11 mit den hier wesentlichen Bauelementen. Die übrigen Module des Systems sind vorzugsweise gleich aufgebaut.

In einer Halbbrücke sind zwei Schalter 1 und 2 in Serie geschaltet. Bei diesen Schaltern 1 und 2 kann es sich um Leistungsschalter und speziell um IGBTs handeln. Das Modul M11 verfügt über zwei Leistungsanschlüsse 3 und 4, von denen der eine Anschluss 3 am Knoten zwischen den Schaltern 1 und 2 liegt. Der zweite Leistungsanschluss 4 liegt am anderen Pol des zweiten Schalters 2.

Der dem Leistungsanschluss 3 abgewandte Kontakt des Schalters 1 ist über einen Kondensator C, der eine Spannungsquelle des Moduls darstellt, an den zweiten Leistungsanschluss 4 gelegt.

Die beiden Schalter 1 und 2 werden von einer Signalverarbeitungseinrichtung 5 gesteuert. Sie besitzt einen Kommunikationsanschluss 6, mit dem die lokale Signalverarbeitungseinrichtung 5, das heißt die modulinterne Signalverarbeitungseinrichtung, mit einer modulexternen Steuerungseinheit, die in FIG 2 nicht dargestellt ist, in Kommunikationsverbindung treten kann. Vorzugsweise erhält die Signalverarbeitungseinrichtung 5 von der externen, zentralen Steuerungseinheit einen Steuerungswert, der von der Signalverarbeitungseinrichtung 5 in konkrete Steuerungssignale für die Schalter 1 und 2 umgesetzt wird.

Bei der Signalverarbeitungseinrichtung 5 kann es sich um ein FPGA oder einen Mikroprozessor handeln. Beide werden gegebenenfalls vor Ort konfiguriert, um das Modul beziehungsweise die Halbbrücke in geeigneter Weise zu steuern. Über den Kommunikationsanschluss 6 kann die Signalverarbeitungseinrichtung 5 gegebenenfalls auch mit einer Hilfsspannung versorgt werden, die die aktiven Bauelemente zum Betrieb benötigen.

Bei dem Steuerwert, den die Signalverarbeitungseinrichtung 5 über den Kommunikationsanschluss 6 von der modulexternen Steuerungseinrichtung erhält, handelt es sich um einen Spannungs-Zeit-Produktwert. Dieser Wert entspricht also einem Produkt eines Spannungswerts und eines Zeitwerts.

Darüber hinaus wird die Spannung an dem Kondensator C, die im eingeschalteten Zustand auch der Spannung an den Leistungskontakten 3 und 4 entspricht, durch einen Spannungsmesser 7 gemessen. Dieser Spannungsmesser 7 kann in die Signalverarbeitungseinrichtung 5 integriert sein oder eine separate Messeinrichtung bilden und mit der Signalverarbeitungseinrichtung 5 zur Übertragung des Spannungsmesswerts gekoppelt sein.

Nachfolgend wird die Funktion des Moduls genauer im Detail erläutert. Ist der Schalter 1 geschlossen und der Schalter 2 geöffnet, so ist der Kondensator 10 an die Leistungsanschlüsse 3 und 4 angeschlossen. Dies bedeutet, dass in diesem Fall an den Leistungsanschlüssen 3 und 4 die Spannung U_{C} anliegt, die über den Kondensator C abfällt und die von dem Spannungsmesser 7 als entsprechender Spannungswert gemessen wird. Andernfalls, wenn der Schalter 1 geöffnet und der Schalter 2 geschlossen ist, ist der Kondensator C überbrückt, und an den Leistungsanschlüssen 3 und 4 liegt keine Spannung an.

Die Signalverarbeitungseinrichtung 5 kennt den aktuellen Spannungswert des Moduls M11, nämlich die am Kondensator C gemessene Spannung U_{C}. Darüber hinaus hat die Signalverarbeitungseinrichtung 5 von der externen Steuerungseinheit über den Kommunikationsanschluss 6 einen Spannungs-Zeit-Produktwert zur Steuerung der Schalter 1 und 2 erhalten. Aus beiden Werten ermittelt die Signalverarbeitungseinrichtung 5 nun die Schaltzeiten der Schalter 1 und 2. Durch Division des Produktwerts durch den gemessenen Spannungswert erhält die Signalverarbeitungseinrichtung 5 einen Zeitwert für die Dauer, in der der Schalter 1 geschlossen und der Schalter 2 geöffnet sein sollte. Gegebenenfalls wird der Zeitwert auch auf eine andere Weise aus dem Produktwert und dem Spannungswert ermittelt. Eventuell können so etwaige parasitäre Effekte berücksichtigt werden. So kann der Zeitwert beispielsweise auch über eine spezielle Funktion oder eine einfache Zuordnung ermittelt werden.

Im Zusammenhang mit FIG 3 kann die Wirkungsweise der Schaltung von FIG 2 besser erfasst werden. Die zentrale Steuerungseinheit liefert als Steuerwert einen bestimmten Spannungs-Zeit-Produktwert und es wird ein aktueller Spannungswert U1 gemessen. Bei idealen Bauelementen würde sich die Spannung U1 in der Einschaltphase zwischen den Zeitpunkten t0 und t1 entsprechend einem Spannungsverlauf u1 nicht ändern, und die Einschaltzeit für den Schalter 1 beziehungsweise die Ausschaltzeit für den Schalter 2 würde im einfachsten Fall dem Quotienten zwischen dem Produktwert und dem Spannungswert entsprechen. Im vorliegenden Beispiel wäre der Zeitwert t1.

Da das Modul jedoch aus realen Bauelementen besteht beziehungsweise einer realen Beschaltung unterworfen ist, verändert sich die Spannung U_{C} in Abhängigkeit von der Zeit. Es ergibt sich beispielsweise der Spannungsverlauf u2 nach dem Anschaltzeitpunkt t0. Die Modulspannung U_{C} sinkt demnach unter den ursprünglichen Wert U1 ab. Da jedoch das Modul von der zentralen Steuerungseinheit als Sollwert den Produktwert U1∗(t1-t0) erhalten hat, muss die Zeit des Impulses verlängert werden, da seine Spannung sinkt.

In einem Ausführungsbeispiel integriert nun die Signalverarbeitungseinrichtung 5 die gemessene Spannung u2 über der Zeit t so lange auf, bis der Produktwert U1∗(t1-t0) erreicht ist. Dies ist im vorliegenden Fall zum Zeitpunkt t2 erreicht. Zu diesem Zeitpunkt t2 wird nun der Schalter 1 geöffnet und der Schalter 2 geschlossen, sodass die Modulspannung U_{C} auf 0 sinkt.

In einem anderen Ausführungsbeispiel wird die bei einem ersten Impuls fehlende Spannungs-Zeit-Fläche erst beim nächsten Impuls ausgeglichen. So wird beispielsweise der Spannungswert unter dem Spannungsverlauf u2 nur zwischen den Zeitpunkten t0 und t1 integriert. Die Differenz des Integrals zu dem Produkt U∗(t1-t0), d.h. dem Integral unter dem Spannungsverlauf u1, wird erst beim nächsten oder einem anderen folgenden Impuls, während dessen der Schalter 1 geschlossen und der Schalter 2 geöffnet ist, berücksichtigt.

Anstatt die zu stellenden PWM-Werte von der zentralen Steuerungseinrichtung zu den einzelnen Modulen zu übertragen, werden also die notwendigen Spannungs-Zeit-Produktwerte zur Modulsteuerung übertragen. Dabei kann man sich der lokalen Modulspannungsmessung bedienen, wodurch eine rasche Reaktion auf Spannungsänderungen möglich ist. Eine derart rasche Reaktion auf Spannungsänderungen ist in der Regel nicht möglich, wenn die gemessenen Spannungswerte erst von den Modulen zu der zentralen Steuerungseinheit übertragen werden müssten.

Da jedes Modul neben der Spannungsmessung auch über eine lokale Signalverarbeitungseinrichtung, insbesondere einen Controller oder FPGA, verfügt, kann nun auf jedem Modul der zustellende PWM-Wert auf Grundlage der aktuelle vorliegenden Modulspannung (Zwischenkreisspannung der Zelle) und des Sollwerts, nämlich des Spannungs-Zeit-Produktwerts, errechnet beziehungsweise bestimmt werden.

In vorteilhafter Weise kann für die verbesserte Modulsteuerung die in der Regel ohnehin vorhandene Messeinrichtung und Ansteuerlogik eines Moduls genutzt werden. Durch die lokale Entkopplung der zu ermittelnden Steuerwerte (z.B. PWM-Werte) von der aktuell vorhandenen Modulspannung ergibt sich ein besseres Verhalten des Gesamtsystems. Es entkoppelt die Einflüsse schwankender Modulspannungen von den übergeordneten Strom- und Spannungsreglern. Dies wiederum ermöglicht ein dynamischeres Einregeln der geforderten Sollwerte.

## Patentansprüche

1. Verteiltes, modulares, elektronisches System, das als modularer Mehrpunktstromrichter ausgebildet ist, mit
- mehreren Modulen (M11 bis M18, M21 bis M28, M31 bis M38) und
- einer Steuerungseinheit (MC),
wobei
- die Steuerungseinheit (MC) dazu ausgebildet ist, als Steuerungswerte jeweils Spannungs-Zeit-Produktwerte an die Module zu senden,
- jedes der Module (M11 bis M18, M21 bis M28, M31 bis M38) mit
o einer an- und abschaltbaren Spannungsquelle (C),
o einem Spannungsmesser (7) zum Gewinnen mindestens eines Spannungsmesswerts (U1) bezüglich der eigenen Ausgangsspannung und
∘ einer Signalverarbeitungseinrichtung (5) zum Erzeugen eines Abschaltsignals in Abhängigkeit von dem mindestens einen Spannungsmesswert (U1) und dem von der Steuerungseinheit (MC) erhaltenen Spannungs-Zeit-Produktwert ausgestattet ist und
- jedes Modul (M11 bis M18, M21 bis M28, M31 bis M38) dazu ausgebildet ist, seine Spannungsquelle (S1, S2) entsprechend dem erzeugten Abschaltsignal abzuschalten.

2. System nach Anspruch 1, das ein Kommunikationssystem (B1 bis B4) zur Kommunikation zwischen den Modulen (M11 bis M18, M21 bis M28, M31 bis M38) und der Steuerungseinheit (MC) aufweist, über den die Spannungs-Zeit-Produktwerte von der Steuerungseinheit (MC) zu den jeweiligen Modulen (M11 bis M18, M21 bis M28, M31 bis M38) übertragbar sind.

3. System nach einem der vorhergehenden Ansprüche, wobei jedes Modul (M11 bis M18, M21 bis M28, M31 bis M38) dazu ausgebildet ist, seine Spannungsquelle (C) durch Pulsweitenmodulation an- und abzuschalten.

4. System nach Anspruch 3, wobei die Spannungs-Zeit-Produktwerte mit einer geringeren Frequenz aktualisiert werden als die Modulationsfrequenz der Pulsweitenmodulation.

5. System nach einem der vorhergehenden Ansprüche, das für Niederspannung unter 1kV ausgelegt ist.

6. System nach einem der vorhergehenden Ansprüche, wobei die Signalverarbeitungseinrichtung (5) dazu ausgelegt ist, für das Abschaltsignal einen Zeitwert (tl) zu bestimmen.

7. System nach Anspruch 6, wobei jedes Modul (M11 bis M18, M21 bis M28, M31 bis M38) dazu ausgelegt ist, für einen ersten Impuls, während dessen die Spannungsquelle (C) angeschaltet ist, den Spannungsmesswert (U1) zu gewinnen und die Dauer eines dem ersten Impuls nachfolgenden zweiten Impulses, während dessen die Spannungsquelle (C) ebenfalls angeschaltet ist, in Abhängigkeit von dem bestimmten Zeitwert einzustellen.

8. System nach einem der Ansprüche 1 bis 5, wobei jedes Modul (M11 bis M18, M21 bis M28, M31 bis M38) dazu ausgelegt ist, kontinuierlich (u2) in regelmäßigen Zeitabständen je einen Spannungsmesswert zu gewinnen, die Spannungsmesswerte zu integrieren und das Abschaltsignal zu erzeugen, wenn der Integrationswert den Spannungs-Zeit-Produktwert erreicht oder übersteigt.

9. Verfahren zum Betreiben eines verteilten, modularen, elektronischen, als modularer Mehrpunktstromrichter ausgebildeten Systems mit mehreren Modulen (M11 bis M18, M21 bis M28, M31 bis M38) und einer Steuerungseinheit (MC), durch
- Senden eines Spannungs-Zeit-Produktwertes als Steuerungswert von der Steuerungseinheit (MC) an eines der Module,
- Gewinnen mindestens eines Spannungsmesswerts (U1) bezüglich der eigenen Ausgangsspannung und Erzeugen eines Abschaltsignals in Abhängigkeit von dem mindestens einen Spannungsmesswert und dem von der Steuerungseinheit (MC) erhaltenen Spannungs-Zeit-Produktwert durch das Modul und
- Abschalten einer Spannungsquelle des Moduls (M11 bis M18, M21 bis M28, M31 bis M38) entsprechend dem Abschaltsignal.

## Claims

1. Distributed modular electronic system in the form of a modular multilevel power converter, having
- a plurality of modules (M11 to M18, M21 to M28, M31 to M38) and
- a control unit (MC), wherein
- the control unit (MC) is designed to transmit respective voltage-time product values to the modules as control values,
- each of the modules (M11 to M18, M21 to M28, M31 to M38) is equipped with
∘ an activatable and deactivatable voltage source (C),
∘ a voltmeter (7) for obtaining at least one measured voltage value (U1) with regard to the respective output voltage, and
∘ a signal processing device (5) for generating a deactivation signal depending on the at least one measured voltage value (U1) and the voltage-time product value obtained from the control unit (MC), and
- each module (M11 to M18, M21 to M28, M31 to M38) is designed to deactivate its voltage source (S1, S2) according to the generated deactivation signal.

2. System according to Claim 1, having a communication system (B1 to B4) for communication between the modules (M11 to M18, M21 to M28, M31 to M38) and the control unit (MC), via which the voltage-time product values are able to be transmitted from the control unit (MC) to the respective modules (M11 to M18, M21 to M28, M31 to M38).

3. System according to either of the preceding claims, wherein each module (M11 to M18, M21 to M28, M31 to M38) is designed to activate and deactivate its voltage source (C) through pulse width modulation.

4. System according to Claim 3, wherein the voltage-time product values are updated at a lower frequency than the modulation frequency of the pulse width modulation.

5. System according to one of the preceding claims, designed for a low voltage of less than 1 kV.

6. System according to one of the preceding claims, wherein the signal processing device (5) is designed to determine a time value (t1) for the deactivation signal.

7. System according to Claim 6, wherein each module (M11 to M18, M21 to M28, M31 to M38) is designed to obtain the measured voltage value (U1) for a first pulse during which the voltage source (C) is activated, and to set the duration of a second pulse, following the first pulse and during which the voltage source (C) is likewise activated, depending on the determined time value.

8. System according to one of Claims 1 to 5, wherein each module (M11 to M18, M21 to M28, M31 to M38) is designed to continuously (u2) obtain a respective measured voltage value at regular time intervals, to integrate the measured voltage values and to generate the deactivation signal when the integration value reaches or exceeds the voltage-time product value.

9. Method for operating a distributed modular electronic system in the form of a modular multilevel power converter having a plurality of modules (M11 to M18, M21 to M28, M31 to M38) and a control unit (MC), by
- transmitting a voltage-time product value from the control unit (MC) to one of the modules as control value,
- obtaining at least one measured voltage value (U1) with regard to the respective output voltage and generating a deactivation signal depending on the at least one measured voltage value and the voltage-time product value obtained from the control unit (MC) by the module, and
- deactivating a voltage source of the module (M11 to M18, M21 to M28, M31 to M38) according to the deactivation signal.

## Revendications

1. Système électronique modulaire réparti, qui est constitué sous la forme d'un convertisseur modulaire à plusieurs points, comprenant
- plusieurs modules (M11 à M18, M21 à M28, M31 à M38) et
- une unité (MC) de commande,
dans lequel
- l'unité (MC) de commande est constituée pour envoyer aux modules, comme valeurs de commande, respectivement, des valeurs du produit tension-temps,
- chacun des modules (M11 à M18, M21 à M28, M31 à M38) est équipé de
o une source (C) de tension pouvant être mise en circuit et hors circuit,
o un mesureur (7) de tension pour obtenir au moins une valeur (U1) de mesure de la tension se rapportant à la propre tension de sortie et
∘ un dispositif (5) de traitement du signal pour produire un signal de mise hors circuit en fonction de la au moins une valeur (U1) de mesure de la tension et de la valeur du produit tension-temps obtenue par l'unité (MC) de commande et
- chaque module (M11 à M18, M21 à M28, M31 à M38) est constitué pour mettre hors circuit sa source (S1, S2) de tension, conformément au signal de mise hors circuit produit.

2. Système suivant la revendication 1, qui a un système (B1 à B4) de communication pour la communication entre les modules (M11 à M18, M21 à M28, M31 à M38) et l'unité (MC) de commande, par lequel les valeurs de produit tension-temps peuvent être transmises de l'unité (MC) de commande aux modules (M11 à M18, M21 à M28, M31 à M38) respectifs.

3. Système suivant l'une des revendications précédentes, dans lequel chaque module (M11 à M18, M21 à M28, M31 à M38) est constitué pour mettre en circuit et hors circuit sa source (C) de tension par une modulation en largeur d'impulsion.

4. Système suivant la revendication 3, dans lequel les valeurs de produit tension-temps sont mis à jour à une fréquence plus petite que la fréquence de modulation de la modulation en largeur d'impulsion.

5. Système suivant l'une des revendications précédentes, qui est conçu pour une tension basse inférieure à 1kV.

6. Système suivant l'une des revendications précédentes, dans lequel le dispositif (5) de traitement du signal est conçu pour déterminer une valeur (t1) de temps pour le signal de mise en circuit.

7. Système suivant la revendication 6, dans lequel chaque module (M11 à M18, M21 à M28, M31 à M38) est conçu pour obtenir la valeur (U1) de mesure de la tension pendant une première impulsion pendant laquelle la source (C) de tension est mise en circuit et la durée d'une deuxième impulsion, qui suit la première impulsion et pendant laquelle la source (C) de tension, est également mise en circuit, est réglée en fonction de la valeur de temps déterminée.

8. Système suivant l'une des revendications 1 à 5, dans lequel chaque module (M11 à M18, M21 à M28, M31 à M38) est conçu pour obtenir en continu (u2) à des intervalles de temps réguliers, respectivement, une valeur de mesure de la tension pour intégrer les valeurs de mesure de la tension et pour produire le signal de mise hors circuit si la valeur d'intégration atteint ou dépasse la valeur du produit tension-temps.

9. Procédé pour faire fonctionner un système électronique modulaire réparti, constitué en convertisseur modulaire à plusieurs points, comprenant plusieurs modules (M11 à M18, M21 à M28, M31 à M38) et une unité (MC) de commande, en
- envoyant une valeur du produit tension-temps comme valeur de commande de l'unité (MC) de commande à l'un des modules,
- obtenant par le module au moins une valeur (U1) de mesure de la tension se rapportant à la propre tension de sortie et produisant un signal de mise en circuit en fonction de la au moins une valeur de mesure de la tension et de la valeur du produit tension-temps obtenu par l'unité (MC) de commande et
- mettant hors circuit une source de tension du module (M11 à M18, M21 à M28, M31 à M38) conformément au signal de mise hors circuit.
